# EUROPEAN PATENT SPECIFICATION

(11) **EP 0 633 130 B1**
(45) Date of publication and mention of the grant of the patent: **28.04.1999**
(21) Application number: 94304805.8
(22) Date of filing: 30.06.1994
(51) Int. Cl.: B29D 30/26

(54) **A tread ring transfer apparatus for use in a green tyre building system**
Vorrichtung zum Transportieren eines Laufflächenrings zur Anwendung in einer Rohrreifenaufbaumaschine
Dispositif de transfert d'une bande annulaire de roulement pour l'utilisation dans un appareil de confection de pneus crus

(30) Priority: 02.07.1993 JP 190833/93
(43) Date of publication of application: 11.01.1995
(73) Proprietor: SUMITOMO RUBBER INDUSTRIES LIMITED, Kobe-shi, Hyogo-ken (JP)
(72) Inventor: Suzuki, Kazuya, Shirakawa-shi, Fukushima-ken (JP)
(74) Representative: Stewart, Charles Geoffrey

(56) References cited:
- EP-A- 0 326 365
- FR-A- 2 331 436
- US-A- 4 402 782

## Description

This invention relates to an apparatus for transferring a tread ring which is used in a green tyre building system.

In green tyre building systems, a tread ring is built on a tread ring forming drum, and then transferred by a transfer ring apparatus from the tread ring forming drum to be positioned around carcass plies place on tyre building drum.

Figure 8 shows the principal portion of a typical conventional transfer ring apparatus known from JP-A-2512834. The conventional transfer ring apparatus comprises a holder frame 100 in the form of a ring and a number of holding segments 101 provided inside the ring-shaped holder frame 100. The holder frame 100 is reciprocally movable from the tread ring forming drum to the tyre building drum, and vice versa. Each holding segment 101 has a rectangular supporting member 102 on an inner end thereof. The supporting members 102 are arranged in a circumferential direction equally spaced. The supporting members 102 can be moved in radially of the ring-shaped holder frame 100. The supporting members 102 are simultaneously moved inwards to hold a tread ring T and moved outwards to release the holding of the tread ring T.

In tyres produced using the conventional transfer ring apparatus provided with equally spaced supporting members 102, however, there have been noticeable Radial Force Variations (referred to as "RFV" hereinafter) in the high variation modes.

It will be seen that vibrations caused by RFVs in the high variation modes are liable to resonate with vibrations of particular parts of an automotive vehicle running at high speeds, and thus generate undesirable noises. Accordingly, there have been demands for making the RFV in the high variation modes as low as possible.

It is an object of the invention to provide an apparatus for transferring a tread ring to overcome the aforementioned problems in the prior art.

It is another object of the invention to provide a tread ring transfer apparatus which can assure production of tyres having less RFVs in high variation modes.

According to the present invention, a tread ring transfer apparatus for use in a green tyre building system, comprising a holder frame in the form of a ring, a plurality of holding segments carried by the holder frame and a plurality of supporting members operable between a tread ring holding state and a tread ring releasing state, each holding segment characterised by the supporting members each projecting from an inner surface of the holder frame and being movable in the radial direction of the holder frame, the supporting member having contact portions, the supporting member being operable to bring the contract portions into contact with an outer surface of a tread ring being transferred, and the contact portions being arranged in a circumferential direction at different intervals.

The contact portions may be arranged in such a manner that any adjacent two of an arbitrary number of contact portions have no interval equal to an angle which is obtained by dividing 360° by the arbitrary number.

It should be appreciated that the tread ring transfer apparatus is constructed by an arm member extending and being movable in radial directions of the holder frame, a supporting member attached on an inner end of the arm member, the supporting member extending in a circumferential direction, and a contact portion attached to an inner surface of the supporting member.

The contact portion may be made to be attachable on a selected position of the inner surface of the supporting member to change the circumferential arrangement of contact portions.

The contact portion may be shaped as a rectangle whose axial width is equal to or smaller than an axial width of the centre flat portion of the tread ring.

The tread ring transfer apparatus, in which the contact portions are arranged in a circumferential direction at different intervals, can reduce the high mode RFVs to a considerably low level, and thus assure production of tyres which are unlikely to resonate with vibrations of particular parts of a high speed running automotive vehicle and to generate noises.

The contact portion arrangement in which any adjacent two of an arbitrary number of contact portions have no interval equal to an angle which is obtained by dividing 360° by the arbitrary number can further reduce the high mode RFVs.

These and other objects, features and advantages of the invention will become apparent upon a reading of the following detailed disclosure of the preferred embodiments with reference to the appended drawings in which:-
Figure 1 is a schematic front elevation view of a green tyre building system provided with the tread ring transfer apparatus of the present invention;
Figure 2 is an enlarged side elevation view of the tread ring transfer apparatus which is in a state before holding a tread ring;
Figure 3 is an enlarged side elevation view of the tread ring transfer apparatus which is in another state when holding the tread ring;
Figures 4A to 4F are unfolded views showing various circumferential arrangements of contact portions for the tread ring transfer apparatus;
Figures 5A to 5F are graphs showing relationships between RFVs and variation modes in tyres produced with use of the present tread ring transfer apparatus, Figures 5A to 5F respectively showing results of the contact portion arrangements shown in Figures 4A to 4F;
Figures. 6A to 6E are unfolded views showing various circumferential arrangements of contact portions having the same interval as conventional tread ring transferring apparatus;
Figures 7A to 7E are graphs showing relationships between RFVs and variation modes in a tyre produced with use of the conventional contact portion arrangements shown in Figures 6A to 6E, Figures 7A to 7E respectively showing results of the contact portion arrangements shown in Figures 6A to 6E; and

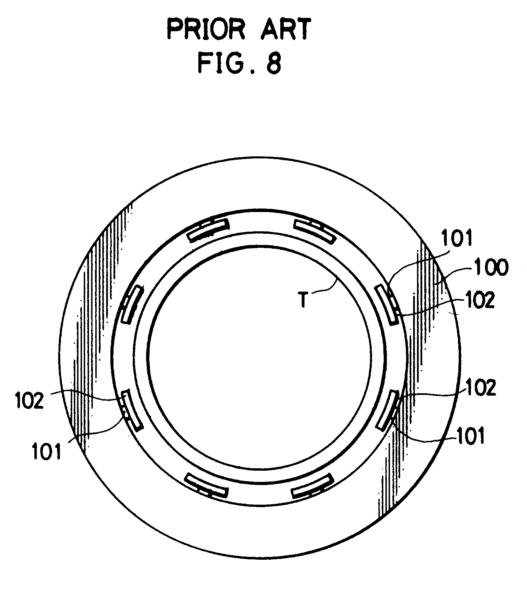

Figure 8 is a side elevation view of a conventional tread ring transferring apparatus.

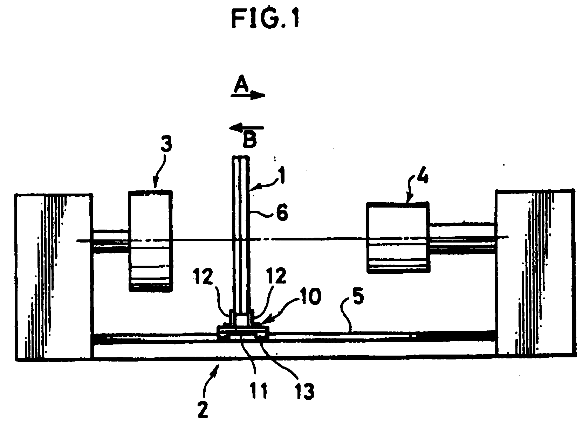

A preferred embodiment of the present invention will be described with reference to the accompanying drawings. Figure 1 shows an overall construction of a green tyre building system 2 provided with an exemplary tread ring transfer apparatus 1 of the present invention. The green tyre building system 2 includes a tread ring forming drum 3 and a tyre building drum 4 which are arranged along the same axial line. The tread ring forming drum 3 and tyre building drum 4 are contractible and expandable in their respective radial directions.

Between the tread ring forming drum 3 and the tyre building drum 4 is provided a tread ring transfer apparatus 1. The tread ring transfer apparatus 1 is reciprocally movable along parallel rails 5 provided as the bottom of the green tyre building system 2.

Specifically, the tread ring transfer apparatus 1 comprises a holder frame 6 in the form of a ring and a base portion 10 for supporting the holder frame 6 in a vertical position. The base portion 10 has a base plate 11, support brackets 12 fixedly attached on a top surface of the base plate 11 for supporting the holder frame 6, and runners 13 fixedly attached on an underside surface of the base plate 11 and slidable along the parallel rails 5.

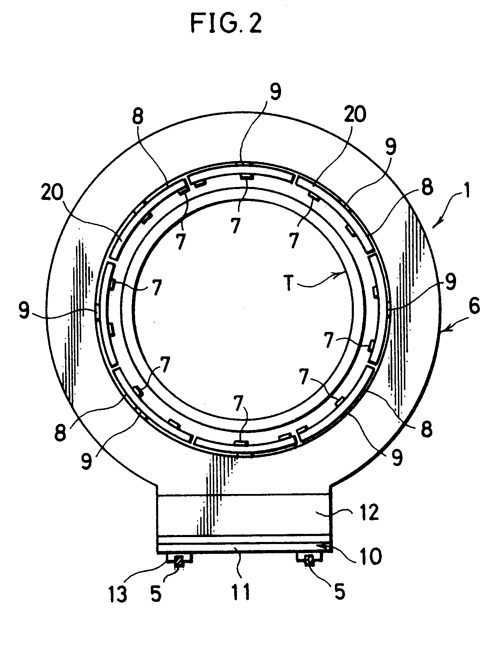

As shown in Figure 2, the holder frame 6 carries a plurality of holding segments 20, i.e., eight holding segments 20 in this embodiment, inside the ring-shaped holder frame 6. Each holding segment 20 has an arm member 9, a supporting member 8 in the form of a circular arc and fixedly attached to the arm member 9, and contact portions 7 mounted on the supporting member 8. The supporting member 8 has a specified width in the axial direction of the ring-shaped holder frame 6.

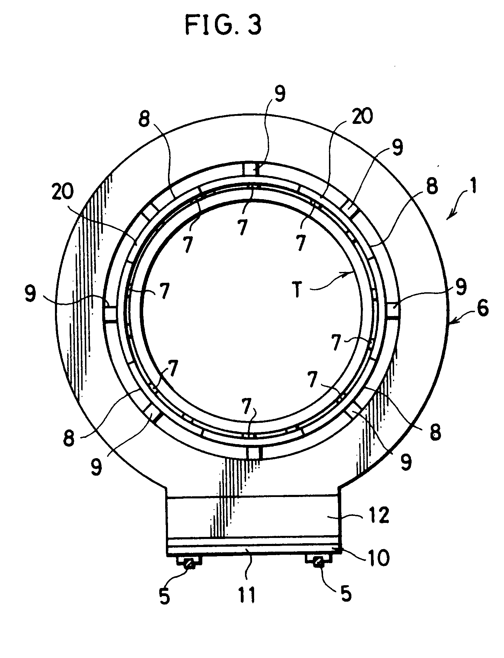

The supporting members 8 are simultaneously moved in radial directions of the ring-shaped holder frame 6 by a conventional expanding/contracting mechanism. The supporting members 8 are changed from a tread ring holding state to a tread ring releasing state, and vice versa. The supporting members 8 are moved in their inwards of the ring-shaped holder frame 6 to provide the holding state and moved outwards to provide a released state. Figure 2 shows the released state while Figure 3 shows the holding state.

The expanding/contracting mechanism is constructed by a single ring member coaxially provided in the holder frame 6 and rotatable around the axis of the holder frame 6, a cylinder for rotating the ring member by a specified amount, link members for connecting the respective arm members 9 of the holding segments 20 to the ring member, and guide members for keeping the arm members 9 in their respective radial movements.

The supporting members 8 are moved in the inwards directions by rotating the ring member of the expanding/contracting mechanism in a first direction by a cylinder to move the arm members 9 in the inwards. The supporting members 8 are moved in the outwards directions by rotating the ring member in a second direction opposite to the first direction to move the arm members 9 outwards.

On an inner surface of each supporting member 8 are mounted contact portions 7. The contact portions 7 are arranged on the respective inner surfaces of the supporting members 8 in such a manner that spaces between adjacent contact portions 7 are at predetermined distances or intervals in the inner position with the supporting members 8 in the holding state. The predetermined intervals will be described later.

It may be preferable to change the interval between contact portions 7, that is, to change the arrangement of contact portions 7. To allow this for example, a plurality of threaded holes may be formed in the inner surface of the supporting member 8. On other hand, the contact portion 7 is formed with a threaded projection. Contact portions 7 are removably mounted at selective positions of the respective inner surfaces of the supporting members 8 to change the intervals between contact portions or change the arrangement of contact portions 7.

Referring again to Figure 1, next, a brief description will be made about the production of a green tyre in the green tyre building system 2. Carcass plies are wound on the tyre building drum 4. A tread ring T is formed on the tread ring forming drum. The transfer ring apparatus 1 is moved along the rails 5 to the tread ring forming drum 3, and the supporting members 8 are moved in the inwards directions or contracted to the holding state so that the tread ring T is then held by the contact portions 7. After the tread ring T is held by the contact portions 7, the tread ring forming drum 3 is contracted to allow the tread ring T to be transferred by the tread ring transfer apparatus 1.

The transfer ring apparatus 1, holding the tread ring T, is moved from the tread ring forming drum 3 to the tyre building drum 4. After the tread ring T is positioned around the carcass plies, the carcass plies are shaped into a toroidal shape until the outer circumference of the carcass plies contacts and adheres to the inner surface of the tread ring T to form a green tyre assembly. Thereafter, the supporting members 8 are moved or expanded outwards into the released state and the transfer ring apparatus 1 is then returned to the initial position.

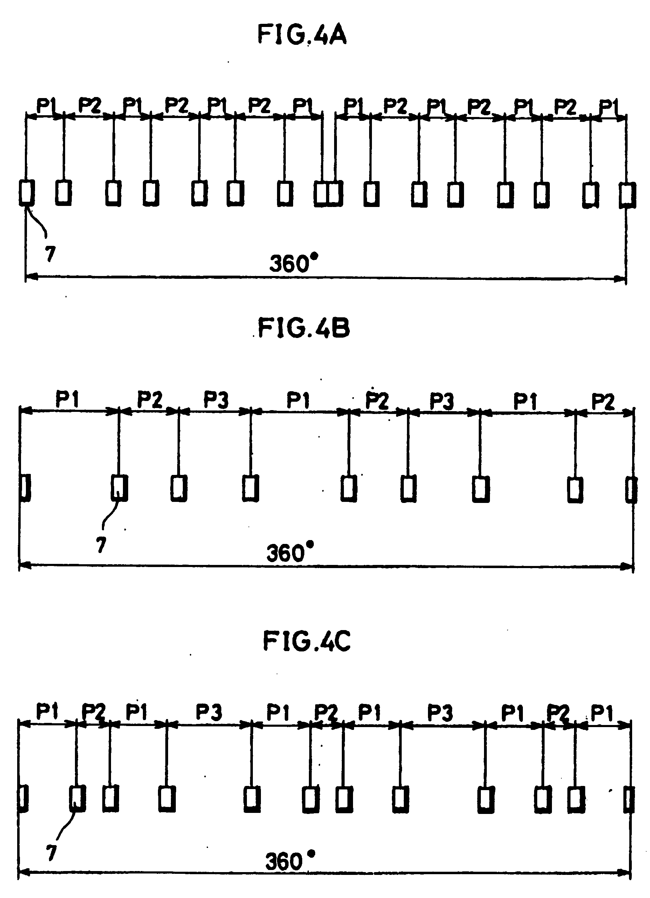

Figures 4A to 4F show various arrangements of contact portions which are settable on the inner surfaces of the supporting members 8 of the tread ring transfer ring apparatus 1.

Each contact portion 7 is shaped as a rectangle having an axial width substantially equal to the width of the centre flat portion of the tread ring. If the width of the contact portion 7 is so large that the contact portion 7 comes into contact with both shoulder portions positioned axially outside the centre flat portion, the RFV in high variation modes will increase.

In the case of transferring a tread ring whose circumference is 1800 mm length, for example, each contact member 7 is a rectangle whose axial width is 50 mm and whose circumferential length is 30 mm.

Specifically, Fig. 4A shows a fourteen-interval arrangement which has eight first intervals P1 of 22.5° and six second intervals P2 of 28.125°.

Figure 4B shows an eight-interval arrangement which has three first intervals P1 of 53.6°, three second intervals P2 of 37°, and two third intervals P3 of 44.1°.

Figure 4C shows an eleven-interval arrangement which has six first intervals P1 of 34°, three second intervals P2 of 20.8°, and two third intervals P3 of 46.8°.

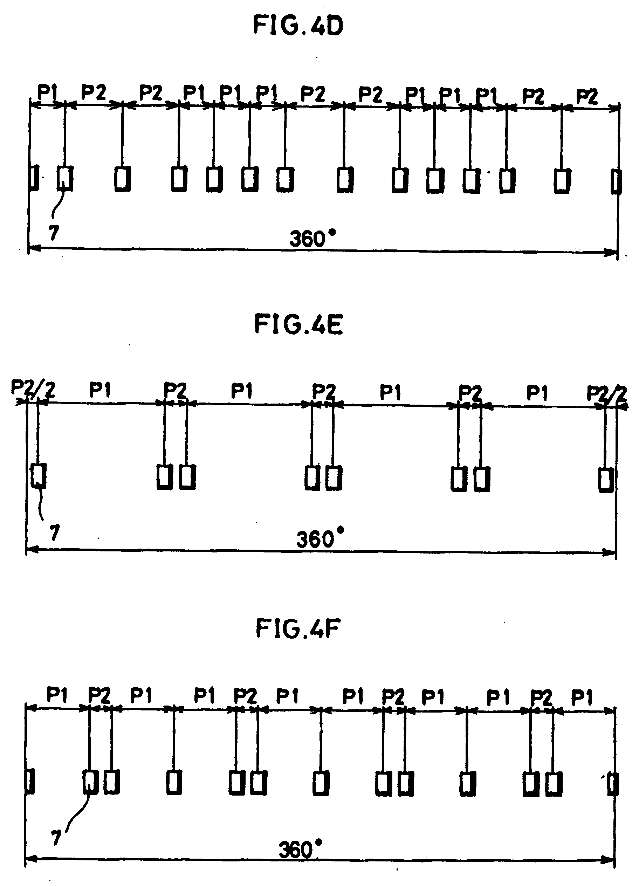

Figure 4D shows a thirteen-interval arrangement which has seven first intervals P1 of 336°/15 and six second intervals P2 of 508°/15.

In the arrangements shown in Figures 4A to 4D, the contact portions 7 are arranged in such a manner that any adjacent two of an arbitrary number of contact portions have no interval equal to an angle which is obtained by dividing 360° by the arbitrary number. For example, any two of the contact portions have no interval equal to 360°/2; any adjacent two of arbitrary three contact portions have no interval equal to 360°/3; any adjacent two of arbitrary four contact portions have no interval equal to 360°/4; any adjacent two of arbitrary five contact portions have no interval equal to 360°/5; any adjacent two of arbitrary six contact portions have no interval equal to 360°/6; and so on.

It may be preferable to set the interval between any adjacent two of an arbitrary number of contact portions three or more degrees smaller or greater than an angle of 360°/the arbitrary number.

Figure 4E shows an eight-interval arrangement which has four first intervals P1 of 72.5° and four second intervals P2 of 17.5°.

Figure 4F shows a twelve-interval arrangement which has eight first intervals P1 of 36.3° and four second intervals P2 of 17.4°.

In the arrangements shown in Figures 4E to 4F, the contact portions are arranged in such a manner that any adjacent two of a particular number of contact portions have an interval equal to an angle which is obtained by dividing 360° by the arbitrary number. Specifically, in Figure 4E, one first interval P1 and one second intervals P2 are alternately arranged four times. Accordingly, the interval between every two contact portions equals to 360°/4. Also, in Figure 4F, two first intervals P1 and one second interval P2 are alternately arranged four times. Accordingly, the interval between every three contact portions equals to 360°/4.

TABLE 1 shows results of a RFV measurement test for tyres which were actually produced with the use of the above-described tread ring transferring apparatus having the contact portion arrangement shown in Figure 4A. In this test, eighteen tyres were produced. The size of the tyres was 185/70R13; the inside pressure was 2.0 kg/cm²; the load was 344 kg; and the rim size was 5JJ x 13 inch.

In TABLE 1: "SP 1" to "SP 18" in the left column respectively denote sample tyres 1 to 18 actually produced with the use of the tread ring transferring apparatus; "MEAN" denotes mean RFVs of the eighteen samples; "σ" denotes standard deviations; "MAX" denotes maximum RFVs of the eighteen samples; and "MIN" denotes minimum RFVs of the eighteen samples. "1ST" to "10TH" in the top line denote the first to tenth variation modes; and "OA" denotes the overall variation.

**TABLE 1**

| RFV IN MODES | | | | | | | | | | | |
|---|---|---|---|---|---|---|---|---|---|---|---|
| | OA | 1ST | 2ND | 3RD | 4TH | 5TH | 6TH | 7TH | 8TH | 9TH | 10TH |
| SP 1 | 3.9 | 1.3 | 1.8 | 1.1 | 0.7 | 0.4 | 0.4 | 0.2 | 0.1 | 0.0 | 0.0 |
| SP 2 | 6.3 | 3.8 | 2.3 | 1.4 | 0.7 | 0.8 | 0.1 | 0.0 | 0.0 | 0.1 | 0.0 |
| SP 3 | 6.9 | 5.1 | 1.8 | 0.6 | 0.1 | 0.4 | 0.2 | 0.1 | 0.1 | 0.1 | 0.0 |
| SP 4 | 4.8 | 3.2 | 1.2 | 1.5 | 0.4 | 0.1 | 0.2 | 0.1 | 0.2 | 0.0 | 0.0 |
| SP 5 | 2.9 | 1.7 | 1.2 | 0.8 | 0.3 | 0.6 | 0.3 | 0.1 | 0.1 | 0.0 | 0.1 |
| SP 6 | 5.5 | 3.3 | 2.4 | 1.0 | 0.3 | 0.4 | 0.2 | 0.2 | 0.2 | 0.1 | 0.1 |
| SP 7 | 4.0 | 3.3 | 1.3 | 0.5 | 0.3 | 0.5 | 0.1 | 0.2 | 0.1 | 0.0 | 0.1 |
| SP 8 | 5.4 | 2.4 | 2.5 | 1.2 | 0.6 | 0.7 | 0.2 | 0.2 | 0.1 | 0.1 | 0.1 |
| SP 9 | 4.8 | 4.0 | 0.3 | 1.0 | 0.3 | 0.5 | 0.1 | 0.1 | 0.2 | 0.1 | 0.1 |
| SP 10 | 5.0 | 2.1 | 2.7 | 1.1 | 0.6 | 0.5 | 0.1 | 0.0 | 0.1 | 0.1 | 0.0 |
| SP 11 | 6.3 | 4.4 | 1.7 | 1.8 | 0.3 | 0.5 | 0.0 | 0.1 | 0.1 | 0.1 | 0.0 |
| SP 12 | 4.0 | 3.3 | 0.8 | 0.7 | 0.5 | 0.4 | 0.3 | 0.1 | 0.2 | 0.0 | 0.1 |
| SP 13 | 5.6 | 3.7 | 1.5 | 1.8 | 0.2 | 0.2 | 0.2 | 0.2 | 0.2 | 0.1 | 0.0 |
| SP 14 | 3.5 | 1.4 | 2.0 | 1.3 | 0.3 | 0.6 | 0.3 | 0.2 | 0.0 | 0.1 | 0.0 |
| SP 15 | 3.7 | 2.5 | 1.7 | 0.9 | 1.0 | 0.4 | 0.2 | 0.2 | 0.1 | 0.0 | 0.0 |
| SP 16 | 6.2 | 4.2 | 2.5 | 1.9 | 0.5 | 0.7 | 0.2 | 0.0 | 0.2 | 0.1 | 0.0 |
| SP 17 | 5.2 | 4.1 | 0.4 | 0.4 | 0.5 | 0.6 | 0.2 | 0.1 | 0.1 | 0.1 | 0.1 |
| SP 18 | 4.6 | 2.1 | 1.2 | 2.0 | 0.1 | 0.4 | 0.5 | 0.1 | 0.1 | 0.1 | 0.0 |
| MEAN | 4.9 | 3.1 | 1.6 | 1.2 | 0.4 | 0.5 | 0.2 | 0.1 | 0.1 | 0.1 | 0.0 |
| σ | 1.1 | 1.1 | 0.7 | 0.5 | 0.2 | 0.2 | 0.1 | 0.1 | 0.1 | 0.0 | 0.0 |
| MAX | 6.9 | 5.1 | 2.7 | 2.0 | 1.0 | 0.8 | 0.5 | 0.2 | 0.2 | 0.1 | 0.1 |
| MIN | 2.9 | 1.3 | 0.3 | 0.4 | 0.1 | 0.1 | 0.0 | 0.0 | 0.0 | 0.0 | 0.0 |

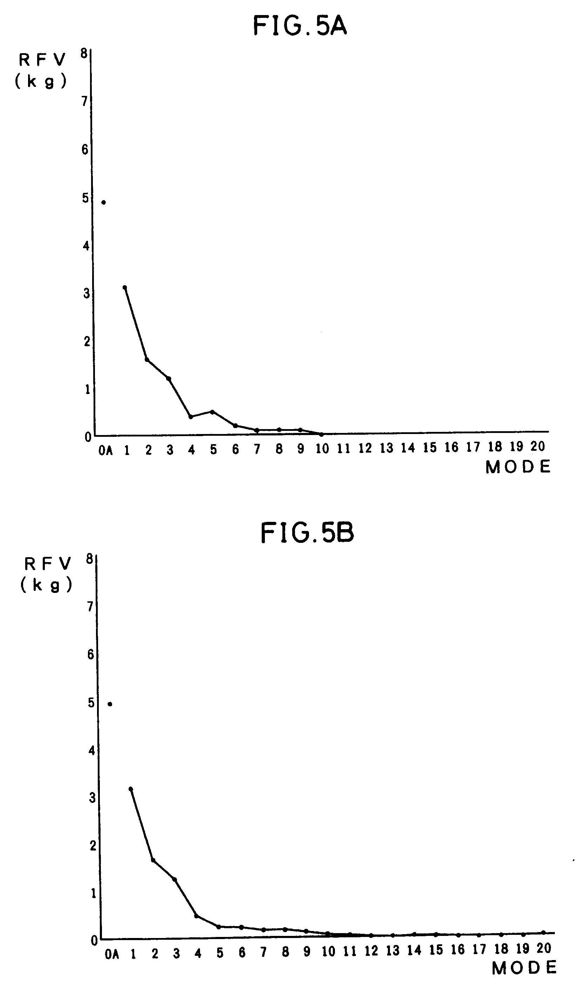

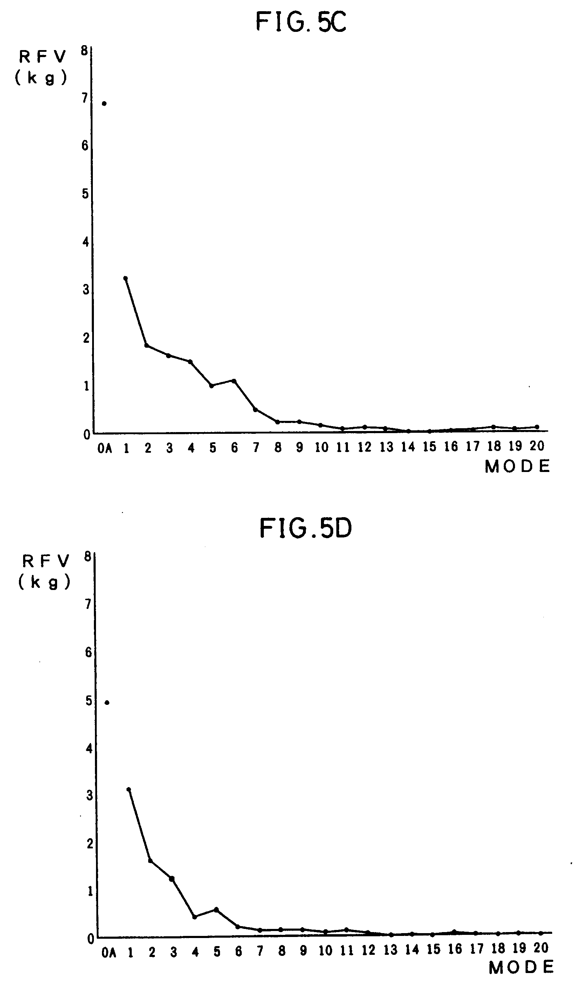

Figure 5A graphically represents the respective mean RFVs of the eighteen samples in the first to tenth variation modes in TABLE 1.

TABLES 2 to 6 show results of a RFV measurement test for tyres which were actually produced with the use of the above-described tread ring transfer ring apparatus having the contact portion arrangements shown in Figures 4B to 4F. The tests were similar to the test for TABLE 1. In the tests for TABLES 2 to 6, however, measurements were carried out with respect to the first to twentieth variation modes. TABLES 2 to 6 show only mean RFVs of a number of samples in the first to twentieth variation modes for simplicity.

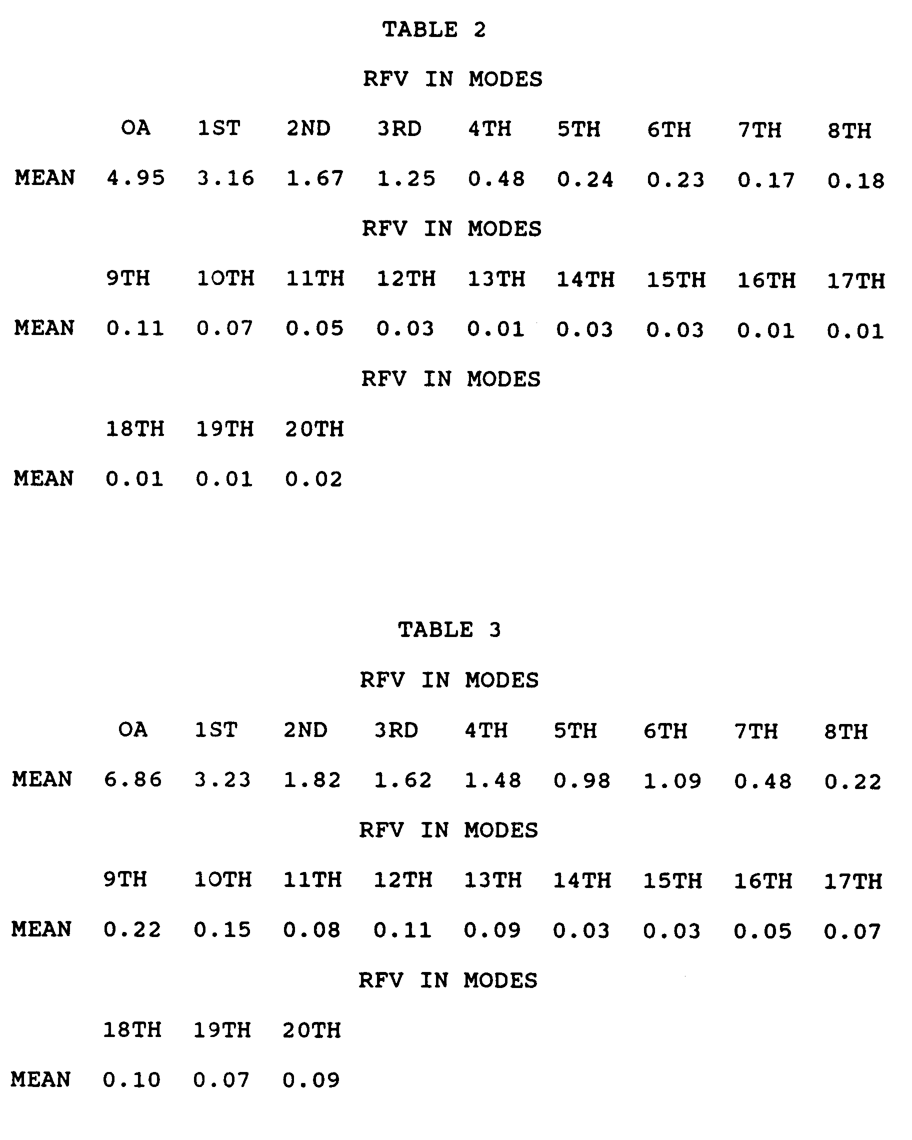

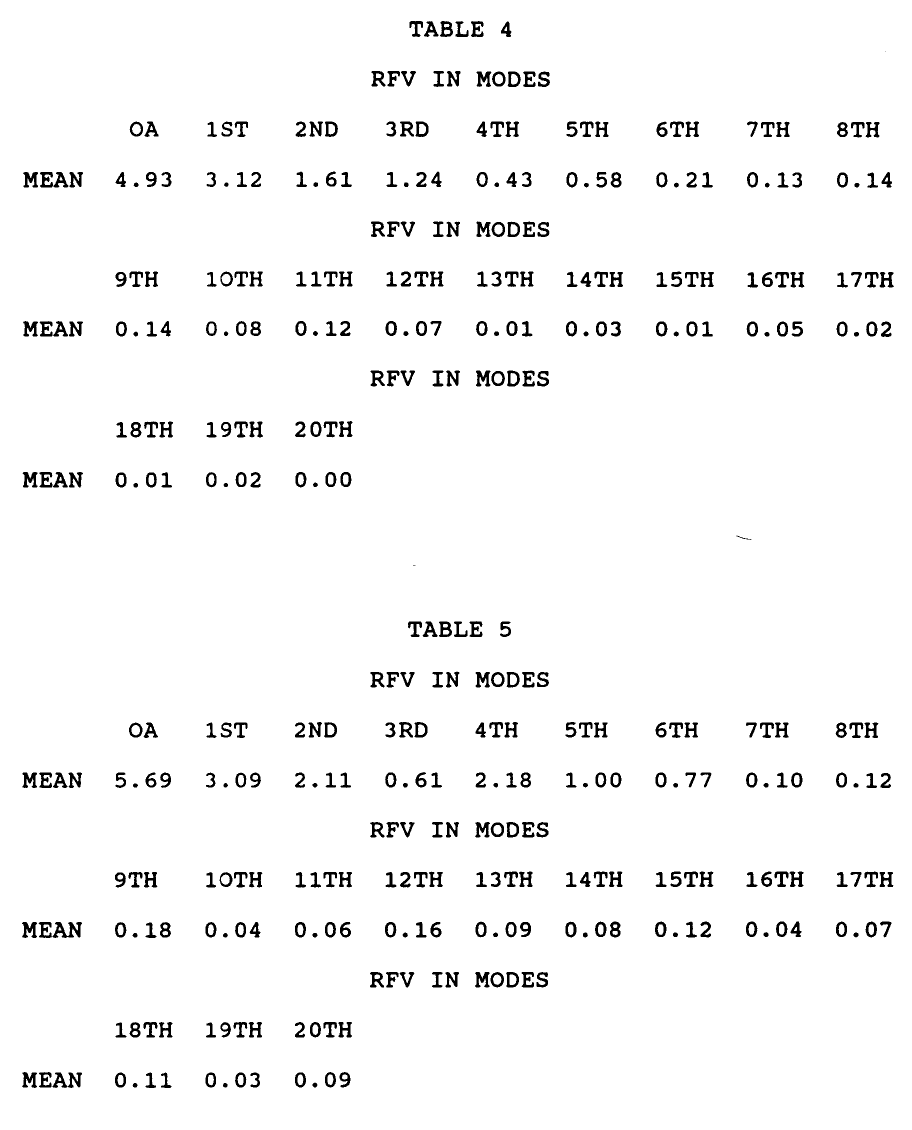

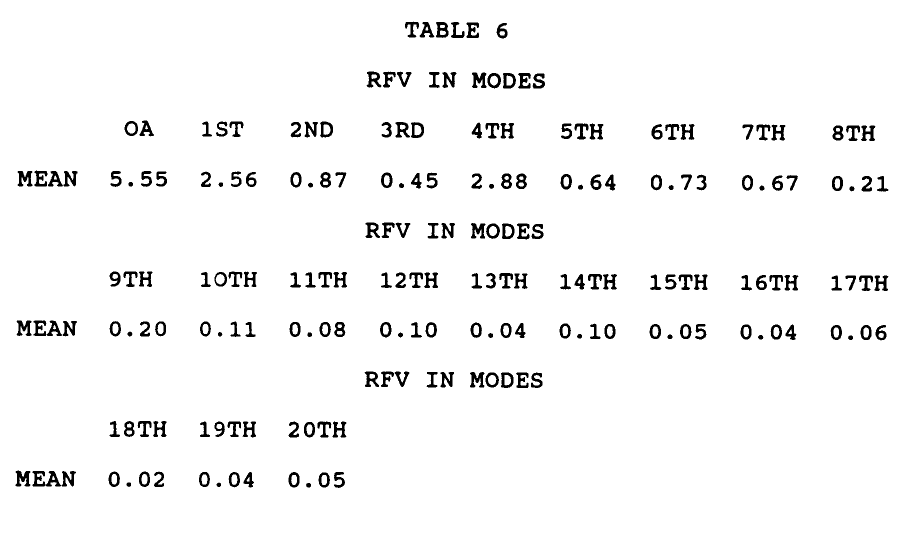

Figures 5B to 5F graphically show the mean RFVs shown in TABLES 2 to 6.

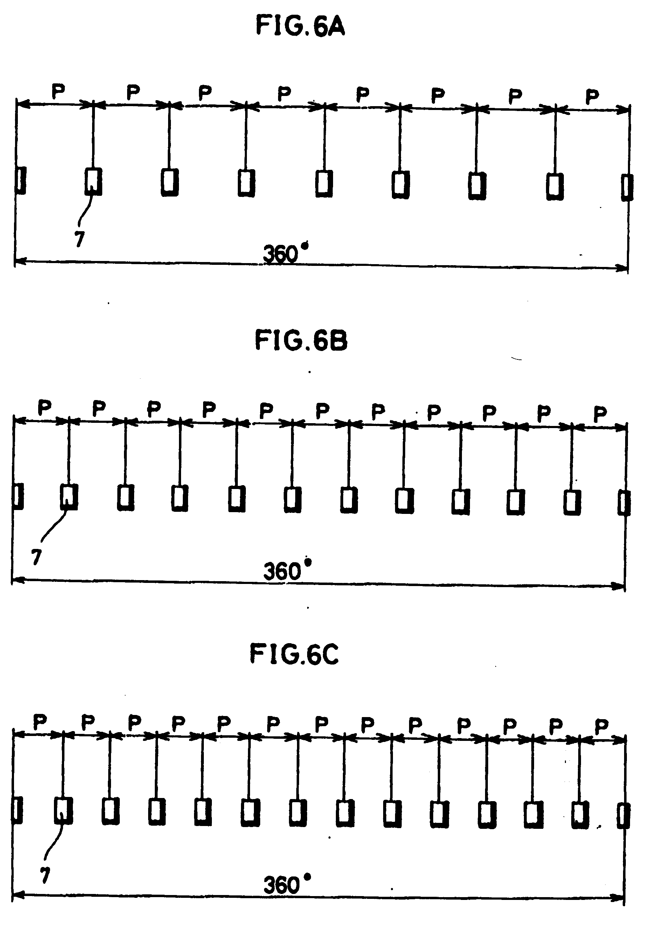

Next, comparative tests were carried out to confirm the advantageous features of the present invention. The comparative tests were carried out in the same way as the above tests for the present invention except for the contact portion being arranged at the same intervals. Figures 6A to 6E show various contact portion arrangements which were set in the comparative tests.

Specifically, Figure 6A shows an eight-interval arrangement which had eight intervals P of 45°.

Figure 6B shows an eleven-interval arrangement which had eleven intervals P of 360°/11.

Figure 6C shows a thirteen-interval arrangement which had thirteen intervals P of 360°/13.

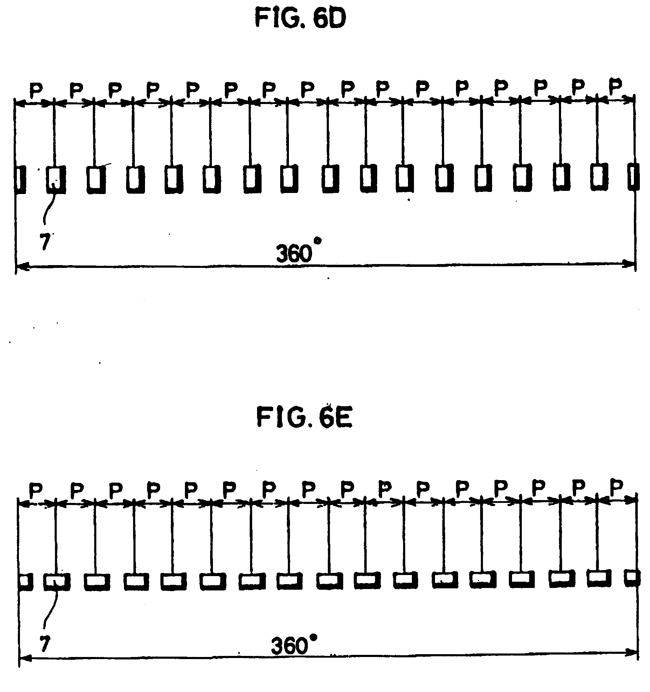

Figure 6D shows a sixteen-interval arrangement which had sixteen intervals P of 360°/16.

Figure 6E shows a sixteen-interval arrangement which had sixteen intervals P of 360°/16. In this arrangement, however, the contact portion was arranged in such a manner that its length of 50 mm was along the circumferential direction of the ring of supporting members and its width of 30 mm was along the axial direction of the supporting member ring.

TABLES 7 to 11 show results of RFV measurement tests of tyres which were actually produced with the use of a tread ring transfer apparatus having the contact portion arrangements shown in Figures 6A to 6E.

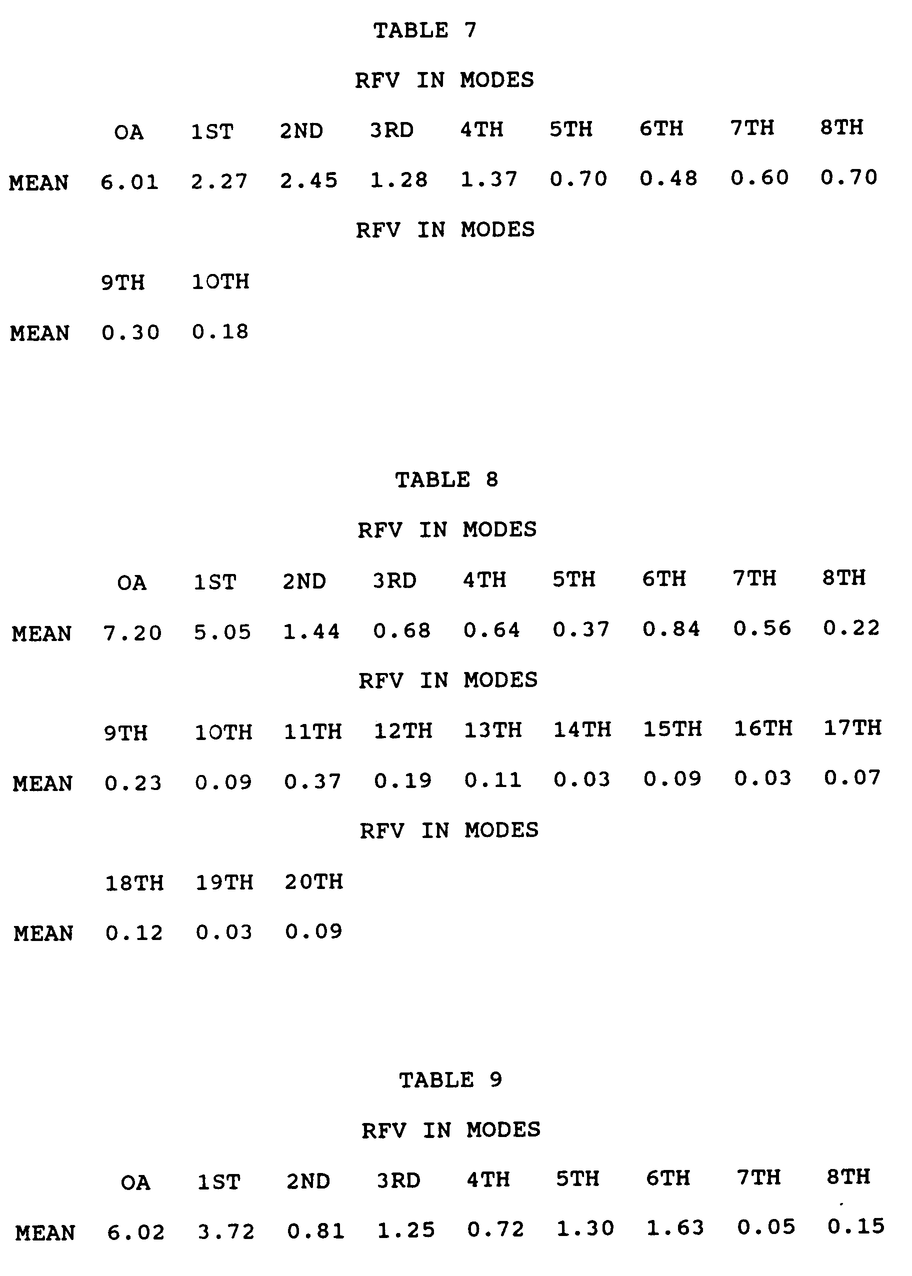

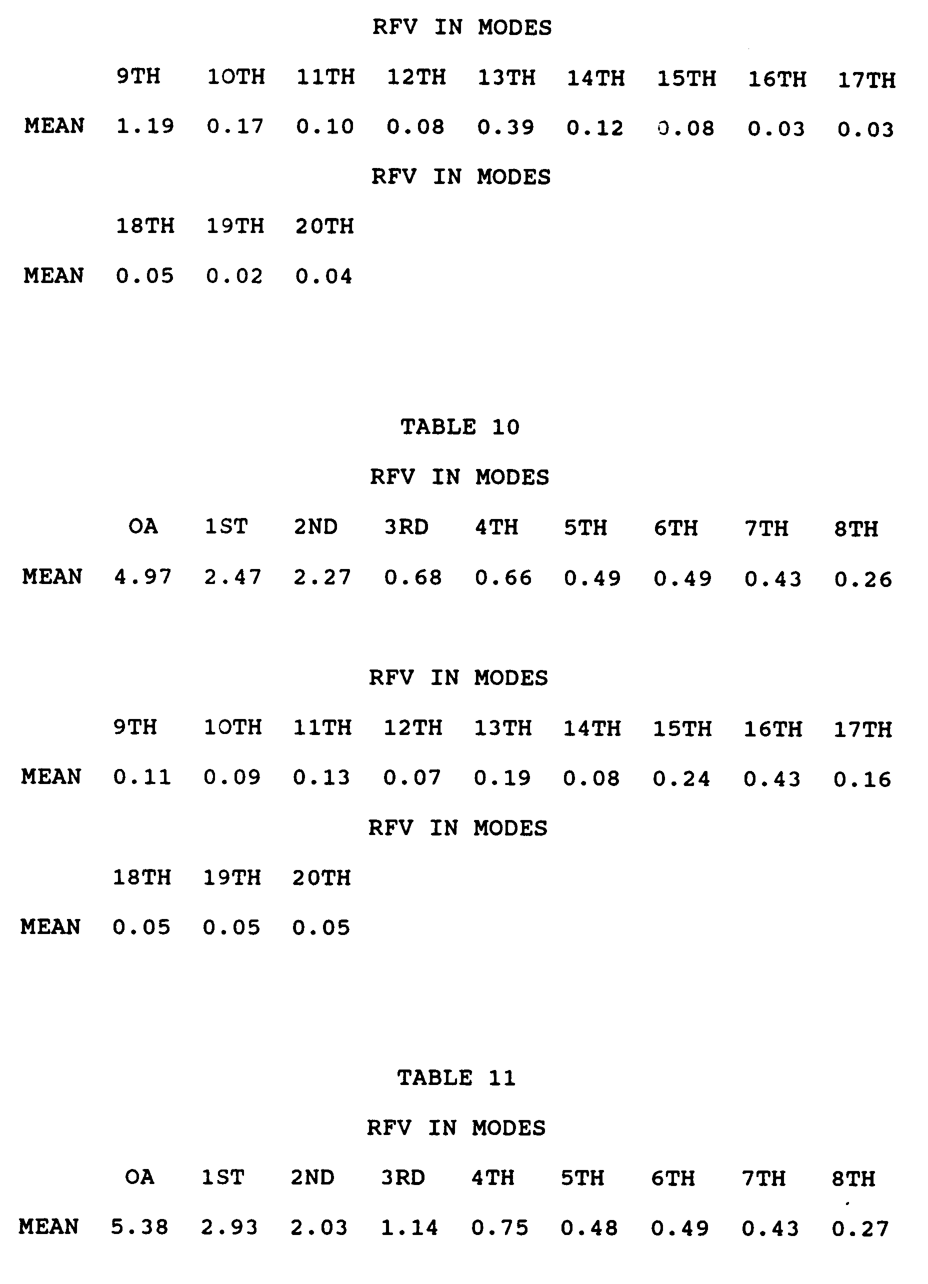

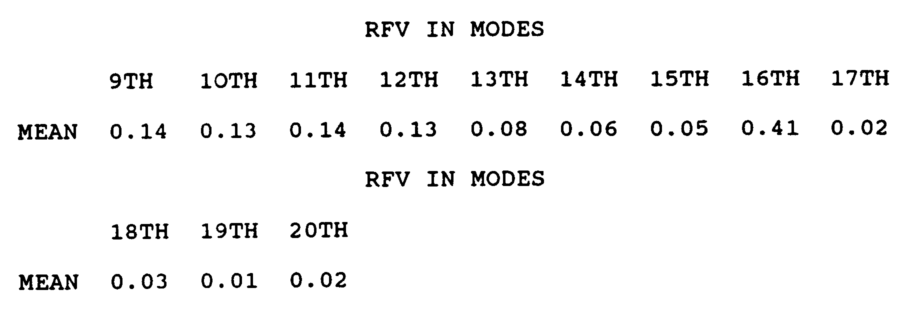

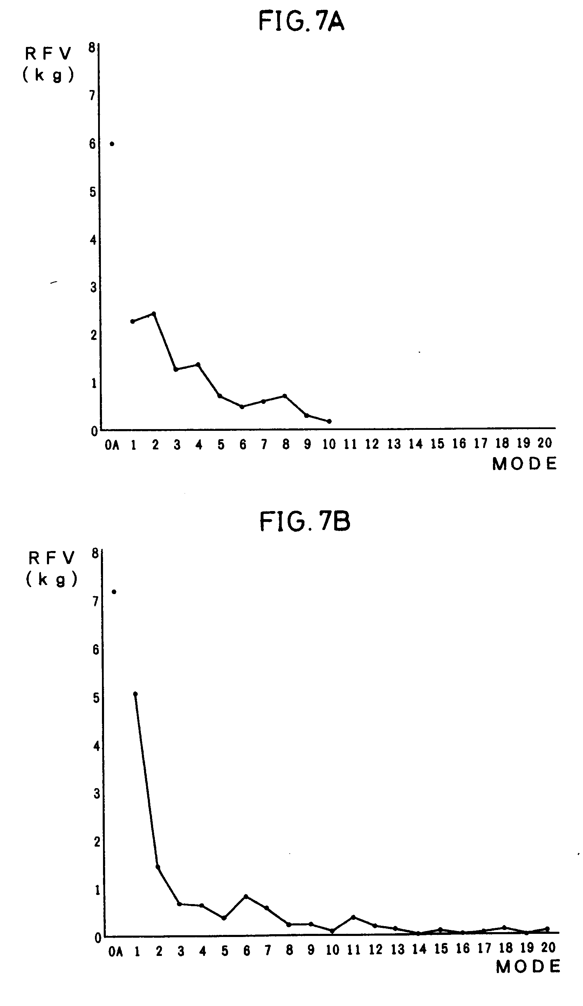

Figures 7A to 7E graphically show the mean RFVs shown in TABLES 7 to 11.

The graphs of Figures 5A to 5D show the results of the tyres which were produced using the contact portion arrangements shown in Figures 4A to 4D. These graphs clarify the advantageous effects of: 1) the RFV generally decreasing as the variation mode proceeds to higher variation modes; and 2) there being no abrupt RFV rise in the high variation modes.

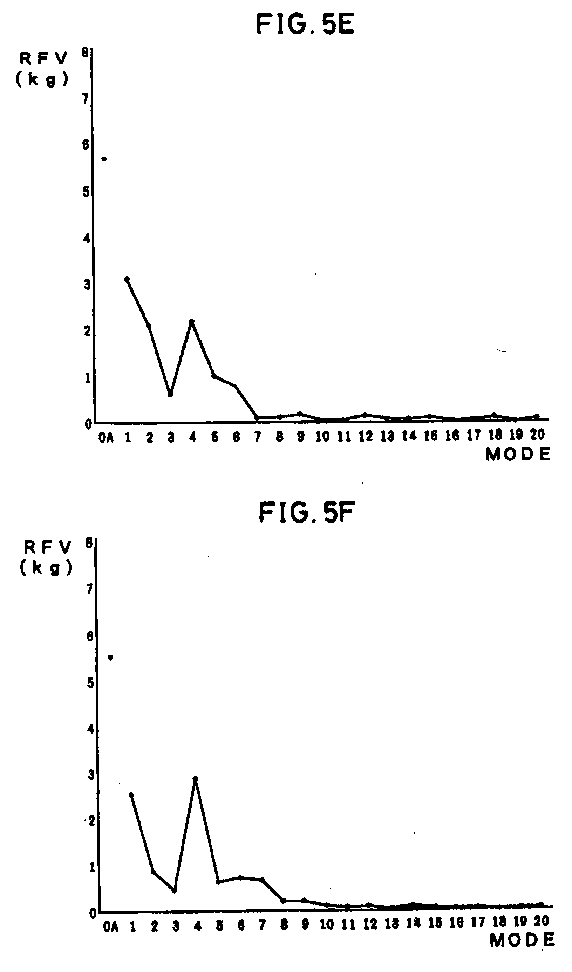

The graphs of Figures 5E and 5F show the results of the tyres which were produced using the contact member arrangements shown in Figures 4E to 4F. These graphs also clarify the advantageous effect that there is no abrupt RFV rise in the high variation modes although the RFV of the fourth variation mode is high.

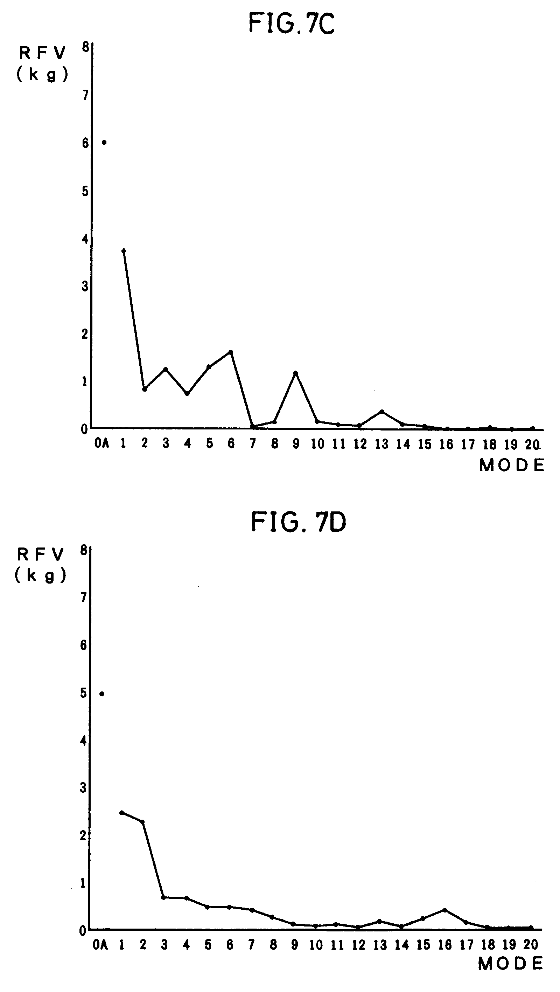

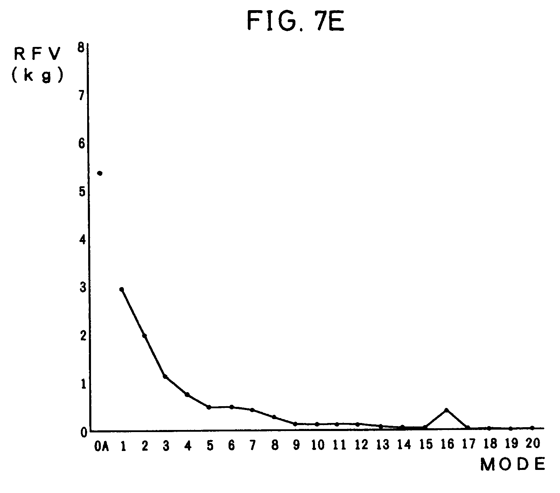

The graphs of Figures 7A to 7E show the results of the tyres which were produced using the contact portion arrangements shown in Figures 6A to 6E. These graphs show there are high RFVs in particular variation modes and further abrupt rises in the high variation modes. Specifically: in Figure 7A, the second, fourth, and eighth variation modes have abrupt rises; in Figure 7B, the sixth and eleventh variation modes have abrupt rises; in Figure 7C, the third, sixth, ninth, and thirteenth variation modes have abrupt rises; in Figure 7D, the sixteenth variation mode has an abrupt rise; and in Figure 7E, the sixteenth variation mode has an abrupt rise. These high RFVs in the high variation modes will be liable to cause undesirable noises when the vehicle is driven at high speed.

As shown in Figures 5A to 5F, lower or neglectable RFVs can be obtained by using the tread ring transferring apparatus 1 provided with contact portions 7 arranged at different intervals.

The RFV can be further suppressed by arranging the contact portions 7 in such a manner that any adjacent two of an arbitrary number of contact portions 7 have no interval equal to an angle which is obtained by dividing 360° by the arbitrary number.

Also, it may be appreciated that the arrangement of contact portions 7 may be changed in accordance with the size or type of tread ring to be transferred to provide an arrangement suitable to the transfer tread ring. This will accomplish more precise suppression of RFVs.

## Claims

1. A tread ring transfer apparatus (1) for use in a green tyre building system, comprising a holder frame (6) in the form of a ring, a plurality of holding segments (20) carried by the holder frame (6) and a plurality of supporting members (8) operable between a tread ring holding state and a tread ring releasing state, each holding segment (20) characterised by the supporting members (8) each projecting from an inner surface of the holder frame (6) and being movable in the radial direction of the holder frame (6), the supporting member (8) having contact portions (7), the supporting member (8) being operable to bring the contract portions (7) into contact with an outer surface of a tread ring being transferred, and the contact portions (7) being arranged in a circumferential direction at different intervals.

2. A tread ring transfer apparatus according to claim 1 characterised in that the contact portions (7) are arranged in such a manner that any adjacent two of an arbitrary number of contact portions (7) have no interval equal to an angle which is obtained by dividing 360° by the arbitrary number.

3. A tread ring transfer apparatus according to claim 1 or 2 characterised by an arm member (9) extending and being movable radially of the holder frame (6), the supporting member (8) attached on an inner end of the arm member (9), the supporting member (8) extending in a circumferential direction, and the contact portion (7) being attached on an inner surface of the supporting member (8).

4. A tread ring transfer apparatus according to claim 3 characterised in that the contact portion (7) is attachable on a selective position of the inner surface of the supporting member (8) to change the circumferential arrangement of contact portions (7).

5. A tread ring transfer apparatus according to claim 3 characterised in that the tread ring has a centre flat portion and shoulder portions positioned axially outside the centre flat portion, and each contact portion (7) is in the form of a rectangle whose axial width is equal to or smaller than the axial width of the centre flat portion of the tread ring.

## Patentansprüche

1. Vorrichtung zum Umsetzen eines Laufstreifenrings (1) zur Verwendung bei einem Aufbausystem für Rohreifen, die eine Halterrahmen (6) in der Form eines Rings, mehrere Haltesegmente (20), die von dem Halterrahmen (6) getragen sind, und mehrere Stützelemente (8) umfaßt, die zwischen einem Laufstreifenringhaltezustand und einem Laufstreifenringlösezustand betätigt werden können, wobei jedes Haltesegment (20) durch die Stützelemente (8) gekennzeichnet ist, die jeweils von einer Innenfläche des Halterrahmens (6) vorspringen und in der radialen Richtung des Halterrahmens (6) bewegbar sind, wobei das Stützelement (8) Kontaktteile (7) aufweist, das Stützelement (8) betätigt werden kann, um die Kontaktteile (7) in Kontakt mit einer Außenfläche eines umzusetzenden Laufstreifenrings zu bringen, und wobei die Kontaktteile (7) in einer Umfangsrichtung in unterschiedlichen Intervallen angeordnet sind.

2. Vorrichtung zum Umsetzen eines Laufstreifenrings nach Anspruch 1,
dadurch **gekennzeichnet,**
daß die Kontaktteile (7) auf eine Art und Weise angeordnet sind, daß irgendwelche zwei benachbarte Kontaktteile einer beliebigen Zahl Kontaktteile (7) kein Intervall aufweisen, das gleich einem Winkel ist, der erhalten wird, indem 360° durch die beliebige Zahl geteilt wird.

3. Vorrichtung zum Umsetzen eines Laufstreifenrings nach Anspruch 1 oder 2,
gekennzeichnet durch
ein Armelement (9), das sich radial von dem Halterrahmen (6) erstreckt und bewegbar ist, wobei das Stützelement (8) an einem inneren Ende des Armelements (9) angebracht ist, wobei das Stützelement (8) sich in einer Umfangsrichtung erstreckt, und wobei das Kontaktteil (7) an einer Innenfläche des Stützelements (8) angebracht ist.

4. Vorrichtung zum Umsetzen eines Laufstreifenrings nach Anspruch 3,
dadurch **gekennzeichnet,**
daß das Kontaktteil (7) an einer wählbaren Position der Innenfläche des Stützelements (8) angebracht werden kann, um die Umfangsanordnung der Kontaktteile (7) zu verändern.

5. Vorrichtung zum Umsetzen eines Laufstreifenrings nach Anspruch 3,
dadurch **gekennzeichnet,**
daß der Laufstreifenring einen mittleren flachen Teil und Schulterteile aufweist, die axial außerhalb des mittleren flachen Teils angeordnet sind, und daß jedes Kontaktteil (7) die Form eines Rechtecks aufweist, dessen axiale Breite gleich oder kleiner als die axiale Breite des mittleren flachen Teils des Laufstreifenrings ist.

## Revendications

1. Appareil (1) de transfert d'anneau de bande de roulement destiné à être utilisé dans un système de confection de pneumatiques non vulcanisés, comprenant un châssis (6) de retenue sous forme d'un anneau, plusieurs segments de retenue (20) portés par le châssis de retenue (6) et plusieurs organes de support (8) qui peuvent travailler entre un état de retenue de l'anneau de bande de roulement et un état de libération de l'anneau de bande de roulement, chaque segment de retenue (20) étant caractérisé en ce que les organes de support (8) dépassent chacun d'une surface interne du châssis de retenue (6) et sont mobiles dans la direction radiale du châssis de retenue (6), l'organe de support (8) ayant des parties de contact (7), l'organe de support (8) pouvant fonctionner afin qu'il place les parties de contact (7) au contact d'une surface interne d'un anneau de bande de roulement en cours de transfert, et les parties de contact (7) sont placées à des intervalles différents dans la direction circonférentielle.

2. Appareil de transfert d'anneau de bande de roulement selon la revendication 1, caractérisé en ce que les parties de contact (7) sont disposées afin que deux parties adjacentes quelconques d'un nombre arbitraire de parties de contact (7) ne présentent pas d'intervalle égal à un angle obtenu par division de 360° par ce nombre arbitraire.

3. Appareil de transfert d'anneau de bande de roulement selon la revendication 1 ou 2, caractérisé par un organe (9) de bras qui s'étend depuis le châssis de retenue (6) et qui est mobile radialement par rapport à ce châssis, l'organe de support (8) étant fixé à une extrémité interne de l'organe de bras (9), l'organe de support (8) s'étendant en direction circonférentielle, et la partie de contact (7) étant fixée à une surface interne de l'organe de support (8).

4. Appareil de transfert d'anneau de bande de roulement selon la revendication 3, caractérisé en ce que la partie de contact (7) peut être fixée sur une partie choisie de la surface interne de l'organe de support (8) afin que la disposition circonférentielle des parties de contact (7) soit modifiée.

5. Appareil de transfert d'anneau de bande de roulement selon la revendication 3, caractérisé en ce que l'anneau de bande de roulement possède une partie centrale plate et des parties d'épaulement positionnées axialement à l'extérieur de la partie centrale plate, et chaque partie de contact (7) est sous forme d'un rectangle dont la largeur axiale est inférieure ou égale à la largeur axiale de la partie centrale plate de l'anneau de bande de roulement.
